# EUROPEAN PATENT APPLICATION

(11) **EP 4 484 592 A1**
(43) Date of publication of application: **01.01.2025**
(21) Application number: 22927272.9
(22) Date of filing: 20.10.2022
(51) Int. Cl.: C22B 7/00, C22B 23/00, C22B 3/06, C22B 3/44, C22B 3/46, B09B 3/70, H01M 10/54

(54) **ALUMINIUM REMOVAL METHOD**

(30) Priority: 21.02.2022 JP 2022025005
(71) Applicant: JX METALS CIRCULAR SOLUTIONS CO., LTD, Tokyo 105-8417 (JP)
(72) Inventor: HIGUCHI, Naoki, Hitachi-shi, Ibaraki 317-0056 (JP)
(74) Representative: Arnold & Siedsma
(86) International application number: PCT/JP2022/039180
(87) International publication number: WO 2023/157378

(57) **Abstract**

A method for removing aluminum includes: a leaching step of leaching battery powder obtained from lithium ion battery waste, the battery powder containing at least aluminum and at least one of nickel and cobalt, with an acid to obtain a leached solution containing at least aluminum ions and at least one of nickel ions and cobalt ions; and a neutralization step including increasing a pH of the leached solution to remove aluminum ions, wherein, when removing the aluminum ions in the neutralization step, an alkaline pH adjusting agent is added to the leached solution to increase the pH, and when the pH reaches 3.0 to 4.0, iron is added in place of the pH adjusting agent to further increase the pH.

## Description

### [Technical Field]

This specification discloses method for removing aluminum from a leached solution obtained by acid leaching of battery powder for lithium ion batteries.

### [Background Art]

In recent years, it has been widely studied for recovery of valuable metals such as cobalt and nickel which may be contained in lithium ion battery waste including cathode materials for lithium ion batteries discarded for expired product life, manufacturing defects or other reasons by means of a wet process, in terms of effective utilization of resources.

In a process of recovering valuable metals from lithium ion battery waste, for example, powder obtained after subjecting the lithium ion battery waste to preprocessing such as roasting (as used herein, the powder is referred to as battery powder) is added to an acidic leaching solution to leach cobalt, nickel and the like which may be contained in the battery powder, thereby obtaining a leached solution.

Subsequently, each metal ion in the solution is separated by multiple-stage solvent extraction processes or the like to recover the valuable metals. In the multiple-stage solvent extraction processes, each of cobalt ions and nickel ions may be sequentially extracted and stripped (see, for example, Patent Literature 1).

By the way, aluminum is used for lithium ion batteries because of its excellent electrical and thermal conductivity, and it is, therefore, also included in the lithium ion battery waste. Aluminum in the lithium ion battery waste is difficult to be completely removed by the above preprocessing, and it remains in the battery powder, and is dissolved together with cobalt and the like during leaching and may be contained as aluminum ions in the leached solution. In recovering the valuable metals from lithium ion battery waste, it will be necessary to remove aluminum ions prior to separation of the valuable metals from the leached solution.

In this regard, Patent Literature 2 describes:
"A method for removing aluminum from an acidic solution in which at least cobalt and aluminum are dissolved, wherein the acidic solution is neutralized in a state of an oxidation-reduction potential (ORPvsAg/AgCl) of the acidic solution of -600 mV or more and 100 mV or less to remove the aluminum".

### Patent Literature 2 discloses:

"The pH of the leached solution in the aluminum removal step is more preferably 4.0 to 6.0, and even more preferably 4.5 to 5.0", "In the aluminum removal step, an alkali such as sodium hydroxide, sodium carbonate and ammonia can be added to the acidic solution to increase the pH to the range described above".

In addition, Patent Literature 2 also mentions:
"An example of a method for reducing an oxidation-reduction potential (ORP vs Ag/AgCl) of an acidic solution to 100 mV or less is to have an elemental metal (metal that is more base than lead) having a higher ionization tendency than lead present when neutralizing the acidic solution. Therefore, an elemental metal having a higher ionization tendency than lead may be added to the acidic solution before neutralization. Examples of the metal having a higher ionization tendency than lead include aluminum, nickel, iron, cobalt, and the like".

### [Citation List]

### [Patent Literature]

[PTL 1]
   Japanese Patent Application Publication No. 2014-162982 A
[PTL 2]
   Japanese Patent Application Publication No. 2017-166028 A

### [Summary of Invention]

### [Technical Problem]

In Patent Literature 2, when removing aluminum ions from the acidic solution, a pH adjusting agent such as sodium hydroxide is added until a predetermined pH is reached to complete the aluminum removal step. In this case, the present inventors have newly found that, particularly when relatively high concentrations of nickel ions and/or cobalt ions are contained in the leached solution as an acidic solution, the nickel ions and/or the cobalt ions are converted to solids and precipitated together with the aluminum ions during aluminum removal, resulting in losses of nickel and/or cobalt.

This specification provides a method for removing aluminum that can effectively suppress the losses of nickel and/or cobalt when removing aluminum ions from the leached solution.

### [Solution to Problem]

The method for removing aluminum disclosed in this specification comprises: a leaching step of leaching battery powder obtained from lithium ion battery waste, the battery powder comprising at least aluminum and at least one of nickel and cobalt, with an acid to obtain a leached solution comprising at least aluminum ions and at least one of nickel ions and cobalt ions; and a neutralization step comprising increasing a pH of the leached solution to remove the aluminum ions, wherein, when removing the aluminum ions in the neutralization step, an alkaline pH adjusting agent is added to the leached solution to increase the pH, and when the pH reaches 3.0 to 4.0, iron is added in place of the pH adjusting agent to further increase the pH.

### [Advantageous Effects of Invention]

According to the method for removing aluminum as described above, when aluminum ions are removed from the leached solution, the losses of nickel and/or cobalt can be effectively suppressed as compared to a case where the pH is increased without switching from an alkaline pH adjusting agent to iron.

### [Brief Description of Drawings]

[FIG. 1]

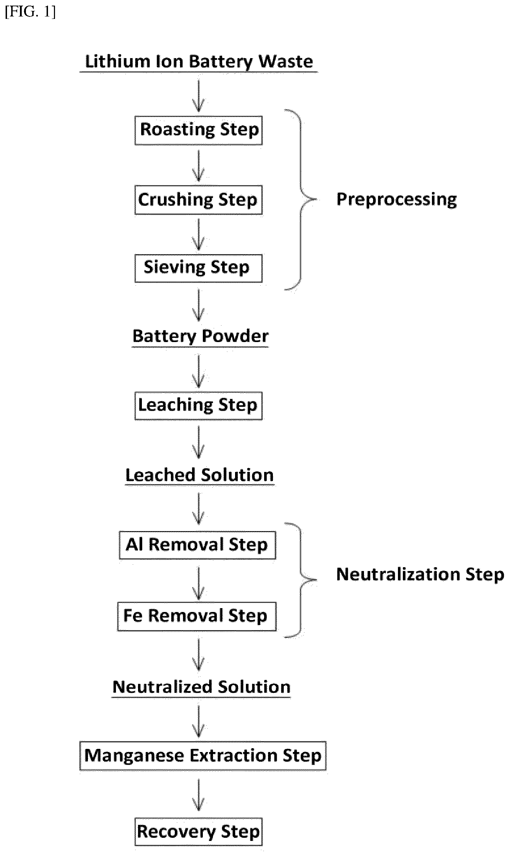

FIG. 1 is a flow chart illustrating a method for recovering metals including a method for removing aluminum according to an embodiment.

### [Description of Embodiments]

Embodiments of the method for removing aluminum described above will be described below in detail.

In an embodiment of a metal recovery method including the method for removing aluminum, as shown in FIG. 1, a leaching step and a neutralization step are sequentially performed on battery powder obtained by subjecting lithium ion battery waste to preprocessing, and a recovery step is then performed. In the leaching step, metals contained in the battery powder are leached with an acid. The metals include at least aluminum, and cobalt and/or nickel, which are dissolved in the leaching step, so that the leached solution contains at least aluminum ions and at least one of nickel ions and cobalt ions.

The neutralization step includes an aluminum removal step. In the aluminum removal step, an alkaline pH adjusting agent is first added to the leached solution to increase the pH rapidly. When the pH reaches 3.0 to 4.0, the addition of the pH adjusting agent is stopped and iron is added to achieve a further increase in the pH. A rate of an increase in the pH when the pH adjusting agent is added is preferably faster than that when iron is added, and the rate of the increase in the pH per minute is 0.005 or more, for example. More preferably, it is 0.010 or more. This can lead to effective precipitation of aluminum while suppressing the precipitation of nickel and cobalt, although the details will be described later. As a result, it is possible to suppress the losses of nickel and/or cobalt as compared to the case where the pH is increased without switching from the alkaline pH adjusting agent to iron. It should be noted that the neutralization step may further include an iron removal step, and in this case, the iron removal step is performed on the aluminum removed solution after the above aluminum removal step. After the neutralization step, a manganese extraction step may be performed. Finally, a recovery step of recovering nickel and/or cobalt may be performed.

### (Lithium Ion Battery Waste)

The lithium ion battery waste of interest is lithium ion secondary batteries which can be used in various electronic devices such as mobile phones and which have been discarded due to the expired life of the product, manufacturing defects or other reasons. The recovery of valuable metals from such lithium ion battery waste is preferred in terms of effective utilization of resources.

The lithium ion battery waste has a housing containing aluminum as an exterior that wraps around the lithium ion secondary battery. Examples of the housing include those made only of aluminum and those containing aluminum, iron, aluminum laminate, and the like. The lithium ion battery waste may also contain, in the above housing, cathode active materials composed of a single metal oxide containing lithium and one selected from the group consisting of nickel, cobalt and manganese, or a composite metal oxides containing lithium and two or more of those, or the like, and aluminum foils (cathode substrates) to which the cathode active materials are applied and fixed by, for example, polyvinylidene fluoride (PVDF) or other organic binders. In addition, the lithium ion battery waste may contain copper, iron, or the like. Further, the housing of the lithium ion battery waste typically contains an electrolyte. For example, ethylene carbonate, diethyl carbonate or the like may be used as the electrolyte.

### (Preprocessing)

In many cases, the lithium ion battery waste is subjected to preprocessing. The preprocessing may include a roasting step, a crushing step and a sieving step. The lithium ion battery waste will be formed into battery powder through the preprocessing.

In the roasting step, the above lithium ion battery waste is heated. The roasting step is carried out for the purpose of changing metals such as lithium and cobalt contained in the lithium ion battery waste to a form which can be easily dissolved. In the roasting step, the lithium ion battery waste is preferably heated by maintaining it in a temperature range of, for example, from 450°C to 1000°C, preferably in a temperature range of from 600°C to 800°C, for 0.5 to 4 hours. The roasting can be carried out in either an air atmosphere or an inert atmosphere such as nitrogen, and in the air atmosphere and the inert atmosphere in this order or in any order. The roasting can be of batch type or continuous type. For example, the batch type includes a stationary furnace, the continuous type includes a rotary kiln furnace, and other various types of furnaces can also be used.

After the roasting step, the crushing step can be carried out to remove cathode active materials and the like from the housings of the lithium ion battery waste. The crushing step selectively separates the cathode active materials from the aluminum foils to which the cathode active materials are applied, while destroying the housings of the lithium ion battery waste. Although the roasting changes the composition of the cathode active material, the roasted cathode active material will also be referred to as a cathode active material.

Various known apparatuses or devices can be used in the crushing step. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste in the crushing step, the sieving step is performed by sieving it using a sieve having an appropriate opening. Thus, aluminum or copper remains on the sieve, and battery powder from which aluminum or copper has been removed to some extent can be obtained under the sieve.

The battery powder obtained through the preprocessing contains at least aluminum and at least one of nickel and cobalt. The battery powder has an aluminum content of, for example, 1% to 10% by mass, typically 3% to 5% by mass. When nickel is contained, the nickel content is, for example, 1% to 30% by mass, typically 5% to 20% by mass. Further, when cobalt is contained, the cobalt content in the battery powder is, for example, 1% by mass to 30% by mass, typically 5% by mass to 20% by mass. The battery powder may also contain lithium in an amount of, for example, 2% to 8% by mass.

The battery powder may further contain manganese. When manganese is contained, the manganese content is, for example, 1% to 30% by mass. The battery powder may also contain 1% to 5% by mass of iron and 1% to 10% by mass of copper.

It should be noted that the roasting step, the crushing step, and the sieving step in the preprocessing may be carried out individually as necessary, or in any order.

### (Leaching Step)

In the leaching step, the above battery powder is added to an acidic leaching solution such as sulfuric acid and leached with the acid. The resulting leached residue and leached solution are separated by solid-liquid separation using a filter press, thickener, or the like, to remove the leached residue.

Optionally, the battery powder may be brought into contact with water prior to the leaching with the acidic leaching solution to extract only lithium contained in the lithium ion battery waste. In this case, the resulting water leached residue obtained after bringing the battery powder into contact with water to leach lithium is added to the above acidic leaching solution and the acid leaching is carried out.

The acid leaching in the leaching step can be carried out by a known method or under known conditions, but it is preferable that the pH is 0.0 to 3.0. At the end of the acid leaching, the pH of the leached solution may be 0.5 to 2.0. The oxidation-reduction potential (ORP vs Ag/AgCl) may be, for example, -250 mV to 0 mV immediately after the acid leaching, and may be about 0 mV to 300 mV in the leached solution after solid-liquid separation.

The leached solution obtained here contains at least aluminum ions and at least one of nickel ions and cobalt ions. In other words, the leached solution contains aluminum ions, and may further contain only either nickel ions or cobalt ions, or may contain both nickel ions and cobalt ions. The leached solution may also contain manganese ions and iron ions. It should be noted that copper which may be contained in the battery powder can be removed by leaving it in the leached residue with substantially no dissolving it by the acid leaching. However, even in this case, the leached solution may contain copper ions.

The leached solution may have, for example, an aluminum ion concentration of 1.0 g/L to 20 g/L, a nickel ion concentration of 10 g/L to 50 g/L, a cobalt ion concentration of 10 g/L to 50 g/L, a manganese ion concentration of 0 g/L to 50 g/L, an iron ion concentration of 0.1 g/L to 5.0 g/L, and a copper ion concentration of 0.005 g/L to 0.2 g/L. As long as the leached solution contains at least one of nickel ions and cobalt ions, the other may not be contained.

### (Neutralization Step)

The neutralization step may include an aluminum removal step (Al removal step). In the aluminum removal step, the pH of the leached solution is increased to precipitate and remove at least a part of the aluminum ions. The neutralization step preferably also includes an iron removal step (Fe removal step) for removing the iron ions after the aluminum removal step for removing the aluminum ions. In the iron removal step, the iron ions can be removed by adding an oxidizing agent to the aluminum removed solution obtained in the aluminum removal step and further adding an alkali to increase the pH. As a result, the neutralized solution as an iron removed solution or the like is obtained.

### (Aluminum Removal Step)

When removing the aluminum ions, first, an alkaline pH adjusting agent is added to the leached solution to increase the pH rapidly. Examples of the alkaline pH adjusting agent used herein include sodium hydroxide, sodium carbonate, and ammonia, and among them, the aqueous lithium hydroxide solution is preferred.

On the other hand, it has been newly found that if the pH adjusting agent is added even after a somewhat high pH has been achieved in the aluminum removal step, the nickel ions in the leached solution are precipitated as nickel oxides or composite oxides of nickel and iron under conditions where the iron ions are present. In order to suppress it, in this embodiment, when the pH reaches 3.0 to 4.0 by adding the pH adjusting agent, iron is added in place of the pH adjusting agent. As iron is added, an amount of H⁺ in the solution decreases based on the reaction formula: Fe + 2H⁺ → Fe² + H₂, and the pH increases. Also, the oxidation-reduction potential decreases. At this time, the precipitation of nickel is suppressed as compared to the case where the pH is increased without switching from the alkaline pH adjusting agent to iron, so that the loss of nickel can be effectively prevented.

The reason why the addition of iron suppresses the precipitation of nickel is not necessarily clear, but it would be because the addition of iron reduces the oxidation-reduction potential, thereby suppressing the generation of the above oxides. Further, it would also be because iron reacts gradually from its solid surface, so that the reaction may proceed more slowly than with liquid pH adjusting agents such as sodium hydroxide or other strong alkalis. In addition, it is also believed that the addition of iron generates hydrogen through the reaction formula: Fe + 2H⁺ → Fe²⁺ + H₂, thereby reducing dissolved oxygen and suppressing the generation of the above oxides. In any case, regardless of such theories, the loss of nickel can be suppressed by switching from the pH adjusting agent to iron in the middle of increasing the pH.

Even if the leached solution contains cobalt ions, as described above, the loss of cobalt can be suppressed by adding iron in place of an alkaline pH adjusting agent when the pH reaches 3.0 to 4.0 by adding the pH adjusting agent.

Furthermore, if the leached solution contains copper ions, the copper ions can also be removed based on the reaction formula: Cu²⁺ + Fe → Cu + Fe²⁺ by adding iron when removing the aluminum ions in the neutralization step.

The form of iron added to the leached solution is not particularly limited as long as it is solid, and it may be metal powder, metal pieces, metal lumps, etc., but from the viewpoint of reactivity, it is preferable to use iron metal powder (so-called iron powder). The iron powder does not necessarily have to be 100% pure, and it may be a commercially available product containing impurities such as oxygen, carbon, magnesium, aluminum, silicon, phosphorus, sulfur, chromium, manganese, nickel, copper, and so on. However, if the proportion of impurities is too high, it may affect the subsequent extraction step, and so high purity iron is preferable.

The timing for switching the additive to the leached solution from the alkaline pH adjusting agent to iron is preferably when the pH reaches 3.0 to 4.0. If the pH is too low when switching the pH adjusting agent to iron, the addition of iron requires a longer time for neutralization than the addition of sodium hydroxide, so that the time required for the aluminum removal step may also be longer. Also, the iron ion concentration in the leached solution may be saturated due to the increase in the amount of iron added. On the other hand, if the pH is too high, there is a concern that certain amounts of nickel and/or cobalt will be lost.

The addition of iron reduces the oxidation-reduction potential (ORP vs Ag/AgCl). The oxidation-reduction potential at the end of the aluminum removal step is preferably 0 mV or less. This is because, as described above, the generation of nickel oxides is suppressed. Furthermore, the oxidation-reduction potential of 0 mV or less at the end of the aluminum removal step allows the dissolution of copper to be suppressed. It should be noted that if the oxidation-reduction potential at the end of the aluminum removal step is too low, there is a concern that nickel and/or cobalt may be reduced to elemental metals to be precipitated. Therefore, it is preferably -400 mV or more.

After switching to the addition of iron, it is preferable to add iron to increase the pH to a value that is in the range of 4.0 to 5.0, and is higher than the value before the addition of the iron (i.e., after the pH is increased by adding the alkaline pH adjusting agent and immediately before it is switched from the pH adjusting agent to iron). If the pH at the end of aluminum removal is too low, aluminum may not be sufficiently removed, while if it is too high, nickel and/or cobalt may also be precipitated. From this viewpoint, it is even more preferable that the pH at the end of aluminum removal is 4.3 to 4.5.

It should be noted that when removing the aluminum ions, the temperature of the leached solution can be 50°C to 90°C. If the temperature of the leached solution is less than 50°C, there is a concern that the reactivity will be poor, and if it is higher than 90°C, a device that can withstand high temperature will be required, as well as it is not preferable from the safety point of view. Also, when iron is added, it is preferable to stir the leached solution.

In the aluminum removal step, it is preferable to precipitate 80% or more of the aluminum content contained in the battery powder by increasing the pH as described above, assuming that the aluminum content in the battery powder is 100% by mass. For example, it is preferable to remove aluminum ions in the aluminum removal step until the aluminum ions in the leached solution are 0.8 g/L or less, particularly 0.2 g/L or less. In addition, the aluminum ions remaining in the aluminum removed solution can be removed in a manganese extraction step as described below. Also, an amount of nickel precipitated at this time is preferably less than 10% by mass, assuming that the nickel content in the battery powder is 100% by mass, and an amount of cobalt precipitated is preferably less than 5% by mass, assuming that the cobalt content in the battery powder is 100% by mass.

After precipitating the aluminum, solid-liquid separation such as filtration is performed using a known apparatus and method such as a filter press and a thickener to remove mainly the precipitated aluminum to obtain an aluminum removed solution.

At this time, in order to contain lithium in the aluminum-containing precipitate and to facilitate its filtration, it is preferable that a molar ratio of lithium to aluminum (Li/Al ratio) in the leached solution is adjusted in advance to be 1.1 or more. In this case, the aluminum contained in the precipitate after aluminum is precipitated contains crystalline composite oxides and composite hydroxides such as LiAlO₂ and LiAl₂(OH)₇, so that the filtration time can be shortened.

### (Iron Removal Step)

An oxidizing agent may be added to the aluminum removed solution to remove iron ions from the aluminum removed solution obtained by removing the aluminum ions. Addition of the oxidizing agent oxidizes the iron in the liquid from divalent to trivalent iron, and the trivalent iron is precipitated as an oxide or hydroxide at a pH lower than that of the divalent iron. The iron is often precipitated as a solid such as iron hydroxide (Fe(OH)₃). Precipitated iron can be removed by solid-liquid separation.

The ORP value during oxidation is preferably 300 mV to 900 mV in order to precipitate the iron. After adding the oxidizing agent, for example, an acid such as sulfuric acid, hydrochloric acid, and nitric acid may be added to decrease the pH. For example, the pH is decreased to less than 3.

The oxidizing agent is not particularly limited as long as it can oxidize iron, but it may preferably be manganese dioxide, a cathode active material, and/or a manganese-containing leached residue obtained by leaching a cathode active material. The manganese-containing leached residue obtained by leaching the cathode active material with the acid or the like may include manganese dioxide. When the cathode active material or the like is used as the oxidizing agent, it causes a precipitation reaction which converts manganese dissolved in the liquid to manganese dioxide, so that the precipitated manganese can be removed together with iron.

After adding the oxidizing agent, the pH can be adjusted to a predetermined range by adding an alkali such as sodium hydroxide, sodium carbonate, or ammonia. For example, the iron can be precipitated by adjusting the pH to the range of 3 to 4.

### (Manganese Extraction Step)

The neutralized solution obtained after the neutralization step can be subjected to a manganese extraction step of extracting the manganese ions and, in some cases, the remaining of the aluminum ions, by solvent extraction, and removing them. In this case, the manganese ions and the remaining of the aluminum ions are extracted to obtain a manganese extracted solution which has removed those ions, as an extracted solution (aqueous phase).

In the manganese extraction step, an extracting agent containing a phosphate ester-based extracting agent is preferably used. Here, examples of the phosphate ester-based extracting agent include di(2-ethylhexyl)phosphoric acid (trade name: D2EHPA or trade name: DP8R). Further, the extracting agent may be a mixture of the phosphate ester-based extracting agent and an oxime-based extracting agent. In this case, the oxime-based extracting agent is preferably aldoxime or contains aldoxime as a main component. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like, and among these, 5-nonylsalicylaldoxime is preferred in terms of cost and the like.

In the solvent extraction for extracting aluminum ions and manganese ions using di(2-ethylhexyl)phosphoric acid or the like, the equilibrium pH is preferably 2.5 to 4.0, more preferably 2.8 to 3.3. It is desirable to carry out the solvent extraction in multiple stages. This makes it possible to more reliably remove manganese ions and aluminum ions from the neutralized solution. When carrying out extraction in multiple stages, it is also effective to set the equilibrium pH during extraction in at least one of the multiple stages, for example the equilibrium pH during extraction in the first stage, within the range as described above, and to lower the equilibrium pH during extraction every time it undergoes the stages.

### (Recovery Step)

After the manganese extraction step, nickel and/or cobalt are recovered from the manganese extracted solution, and a recovery step can optionally be carried out to further recover lithium.

More specifically, cobalt is first recovered, and here, the manganese extracted solution is subjected to solvent extraction, preferably using a phosphonate ester-based extractant, to extract cobalt ions into the solvent. As the phosphonate ester-based extractant, 2-ethylhexyl 2-ethylhexylphosphonate (trade name: PC-88A, Ionquest 801) is preferred from the viewpoint of the separation efficiency of nickel ions and cobalt ions. When extracting cobalt ions, the equilibrium pH is preferably 4.5 to 5.5, more preferably 4.8 to 5.2. The solvent (organic phase) containing cobalt ions after the solvent extraction can be subjected to stripping. Cobalt can be obtained as a solution by the stripping step. When magnesium ions are contained in the resulting cobalt solution, for example, a carboxylic acid-based extractant may be used to perform solvent extraction to separate the magnesium ions. Also, the resulting cobalt solution can optionally be subjected to a crystallization step. This allows cobalt salts (for example, cobalt sulfate, cobalt hydrochloride, cobalt nitrate) to be produced. In addition, if the manganese extracted solution does not contain cobalt ions, it is not necessary to recover cobalt.

Subsequently, in order to recover nickel, the extracted solution obtained by the solvent extraction of cobalt ions is subjected to solvent extraction, preferably using a carboxylic acid-based extractant, to separate nickel ions. Examples of carboxylic acid-based extractant include neodecanoic acid and naphthenic acid, among which neodecanoic acid is preferred due to the ability to extract nickel. The extractant (organic phase) containing nickel ions after the solvent extraction can be subjected to stripping. The stripping step can provide nickel as a solution. Also, the resulting nickel solution can optionally be subjected to a crystallization step. This allows nickel salts (e.g. nickel sulfate, nickel hydrochloride, nickel nitrate) to be produced. It should be noted that if the manganese extracted solution does not contain nickel ions, it is not necessary to recover nickel.

The remaining of nickel ions and lithium ions are then extracted and stripped from the extracted solution obtained by the solvent extraction during recovery of nickel, and the extracting and stripping operations are repeated to concentrate the lithium ions. The extractant used in the lithium concentration includes, preferably, those containing 2-ethylhexyl 2-ethylhexylphosphonate or di(2-ethylhexyl)phosphoric acid. This provides a lithium concentrated solution.

### [Examples]

Next, the method for removing aluminum as described above was experimentally carried out and the effects thereof were confirmed, as described below. However, the descriptions herein are merely for illustrative and are not intended to be limited.

### (Example 1)

The battery powder shown in Table 1 obtained from lithium ion battery waste was leached with a sulfuric acid leaching solution to obtain the leached solution shown in Table 2.

**[Table 1]**

| Battery Powder | Content (%) |
|---|---|
| Ni | 10 |
| Co | 10 |
| Al | 2 |
| Cu | 6 |
| Fe | 1 |

**[Table 2]**

| | pH | ORP (mV) |
|---|---|---|
| Leached Solution | 1.3 | 12 |

To the leached solution as described above was added 250 g/L of sodium hydroxide at a rate of 4 ml/min. When the pH reached 3.0, the addition of sodium hydroxide was stopped, and industrial iron powder (manufactured by Höganäs, product name NC100.24) was added at a rate of 0.25 g/20 min to increase the pH to 4.3. This provided the aluminum removed solution shown in Table 3. The addition of the iron powder resulted in an oxidation-reduction potential (ORP vs Ag/AgCl) of -80 mV. Solid-liquid separation was then carried out to obtain the aluminum removed residue shown in Table 4. It should be noted that the distribution ratio of the aluminum removed residue as used herein refers to a value obtained by calculating a ratio of each meal contained in the aluminum removed residue, assuming that the ratio of each metal contained in the battery powder before leaching is 100%, on a mass basis.

**[Table 3]**

| | pH | ORP (mV) | Al [g/L] |
|---|---|---|---|
| Aluminum Removed Solution | 4.3 | -80 | 0.19 |

**[Table 4]**

| Aluminum Removed Residue | Distribution Ratio (%) |
|---|---|
| Ni | 5 |
| Co | 1 |
| Al | 86 |
| Cu | 70 |

As can be seen from Table 4, the loss of nickel could be sufficiently reduced to 5% while effectively removing aluminum ions. The loss of cobalt was also sufficiently reduced to 1%. Furthermore, the copper ions were also effectively removed.

### (Comparative Example)

The battery powder shown in Table 5 obtained from lithium ion battery waste was leached with a sulfuric acid leaching solution to obtain the leached solution shown in Table 6.

**[Table 5]**

| Battery Powder | Content (%) |
|---|---|
| Ni | 10 |
| Co | 10 |
| Al | 3 |
| Cu | 5 |
| Fe | 1 |

**[Table 6]**

| | pH | ORP (mV) |
|---|---|---|
| Leached Solution | 1.5 | 17 |

To the above leached solution was added 250 g/L of sodium hydroxide at a rate of 4 ml/min to increase the pH to 4.5. This provided the aluminum removed solution shown in Table 7. The oxidation-reduction potential (ORP vs Ag/AgCl) at this time was 31 mV. Solid-liquid separation was then carried out to obtain the aluminum removed residue shown in Table 8.

**[Table 7]**

| | pH | ORP (mV) | Al [g/L] |
|---|---|---|---|
| Aluminum Removed Solution | 4.5 | 31 | 0.1 |

**[Table 8]**

| Aluminum Removed Residue | Distribution Ratio (%) |
|---|---|
| Ni | 10 |
| Co | 5 |
| Al | 50 |
| Cu | 67 |

It can be seen from Table 8 that the aluminum removed residue contained 10% nickel, indicating that there was a large loss of nickel. It also contained 5% cobalt, indicating that there was a large loss of cobalt.

### (Example 2)

The battery powder shown in Table 9 obtained from lithium ion battery waste was leached with a sulfuric acid leaching solution to obtain the leached solution shown in Table 10.

**[Table 9]**

| Battery Powder | Content (%) |
|---|---|
| Ni | 9 |
| Co | 9 |
| Al | 8 |
| Cu | 4 |
| Fe | 1 |

**[Table 10]**

| | pH | ORP (mV) |
|---|---|---|
| Leached Solution | 0.6 | 26 |

To the leached solution as described above was added 100 g/L of sodium hydroxide at a rate of 4 ml/min, and when the pH reached 3.0, the rate of addition of sodium hydroxide was changed to 1 ml/min, and when the pH reached 4.0, the addition of sodium hydroxide was stopped, and industrial iron powder (manufactured by Höganäs, product name NC100.24) was added at a rate of 0.25 g/20 min to increase the pH to 4.5. This provided the aluminum removed solution shown in Table 11. By adding iron powder, the oxidation-reduction potential (ORP vs Ag/AgCl) of the neutralized solution was -353 mV. Solid-liquid separation was then carried out to obtain the aluminum removed residue shown in Table 12.

**[Table 11]**

| | pH | ORP (mV) | Al [g/L] |
|---|---|---|---|
| Aluminum Removed Solution | 4.5 | -353 | 0.15 |

**[Table 12]**

| Aluminum Removed Residue | Distribution Ratio (%) |
|---|---|
| Ni | 9 |
| Co | 1 |
| Al | 97 |
| Cu | 100 |

As can be seen from Table 12, the loss of nickel was sufficiently reduced to 9% while effectively removing aluminum ions. The loss of cobalt was also sufficiently reduced to 1%. Furthermore, copper ions were also effectively removed.

### (Reference Example)

The battery powder shown in Table 13 obtained from lithium ion battery waste was leached with a sulfuric acid leaching solution to obtain the leached solution shown in Table 14.

**[Table 13]**

| Battery Powder | Content (%) |
|---|---|
| Ni | 19 |
| Co | 7 |
| Al | 5 |
| Cu | 3 |
| Fe | 1 |

**[Table 14]**

| | pH | ORP (mV) |
|---|---|---|
| Leached Solution | 1.3 | 12 |

To the above leached solution was added 100 g/L of sodium hydroxide at a rate of 4 ml/min, and when the pH reached 3.0, the rate of the addition of sodium hydroxide was changed to 1 ml/min to increase the pH to 4.5. This provided the aluminum removed solution shown in Table 15. The oxidation-reduction potential (ORP vs Ag/AgCl) at this time was 97 mV. Solid-liquid separation was then carried out to obtain the aluminum removed residue shown in Table 16.

**[Table 15]**

| | pH | ORP (mV) | Al [g/L] |
|---|---|---|---|
| Aluminum Removed Solution | 4.4 | 97 | 0.13 |

**[Table 16]**

| Aluminum Removed Residue | Distribution Ratio (%) |
|---|---|
| Ni | 17 |
| Co | 5 |
| Al | 100 |
| Cu | 87 |

It is found from Table 16 that the aluminum removed residue contained 17% nickel, indicating that there was a large loss of nickel. It also contained 5% cobalt, indicating that there was a large loss of cobalt.

In view of the foregoing, it was found that the method for removing aluminum as described above can effectively suppress the losses of nickel and/or cobalt when removing aluminum ions from the leached solution.

## Claims

1. A method for removing aluminum, the method comprising:
a leaching step of leaching battery powder obtained from lithium ion battery waste, the battery powder comprising at least aluminum and at least one of nickel and cobalt, with an acid to obtain a leached solution comprising at least aluminum ions and at least one of nickel ions and cobalt ions; and
a neutralization step comprising increasing a pH of the leached solution to remove the aluminum ions,
wherein, when removing the aluminum ions in the neutralization step, an alkaline pH adjusting agent is added to the leached solution to increase the pH, and when the pH reaches 3.0 to 4.0, iron is added in place of the pH adjusting agent to further increase the pH.

2. The method for removing aluminum according to claim 1, wherein, when removing the aluminum ions in the neutralization step, the addition of iron increases the pH to a value that is in a range of 4.0 to 5.0 and is higher than that before the addition of the iron.

3. The method for removing aluminum according to claim 1 or 2, wherein an oxidation-reduction potential (ORP vs Ag/AgCl) is 0 mV or less by adding the iron when removing the aluminum ions in the neutralization step.

4. The method for removing aluminum according to any one of claims 1 to 3,
wherein the leached solution further comprises copper ions, and
wherein, when removing the aluminum ions in the neutralization step, the copper ions are removed by adding the iron.

5. The method for removing aluminum according to any one of claims 1 to 4, wherein, assuming that each of an aluminum content and a nickel content in the battery powder is 100% by mass, the neutralization step removes 80% or more of aluminum ions in the aluminum content, while suppressing the loss of nickel to less than 10% of the nickel content.

6. The method for removing aluminum according to any one of claims 1 to 5, wherein, assuming that each of an aluminum content and a cobalt content in the battery powder is 100% by mass, the neutralization step removes 80% or more of aluminum ions in the aluminum content, while suppressing the loss of cobalt to less than 5% of the cobalt content.

7. The method for removing aluminum according to any one of claims 1 to 6, wherein the neutralization step further comprises adding an oxidizing agent to the aluminum removed solution obtained by removing the aluminum ions to remove iron ions.

8. The method for removing aluminum according to any one of claims 1 to 7, wherein:
the leached solution further comprises manganese ions,
a part of the aluminum ions is removed in the neutralization step, and
the method further comprises a manganese extraction step of extracting the manganese ions and the remaining of the aluminum ions from the neutralized solution obtained in the neutralization step by solvent extraction.

9. The method for removing aluminum according to any one of claims 1 to 8, wherein:
the leached solution comprises nickel ions,
the method further comprises a recovery step of recovering the nickel ions after the neutralization step, and
the recovery step comprises extracting the nickel ions by solvent extraction and stripping them.

10. The method for removing aluminum according to claim 9, wherein:
the leached solution further comprises cobalt ions, and
the recovery step comprises extracting the cobalt ions by solvent extraction and stripping them, before the extraction and the stripping of the nickel ions.
